# EUROPÄISCHE PATENTSCHRIFT

(11) **EP 3 925 759 B1**
(45) Veröffentlichungstag und Bekanntmachung des Hinweises auf die Patenterteilung: **31.05.2023**
(21) Anmeldenummer: 21167358.7
(22) Anmeldetag: 08.04.2021
(51) Int. Cl.: B29C 64/129, B29C 64/245, B29C 64/277, B33Y 10/00, B33Y 30/00

(54) **BAUPLATTFORM ZUM SCHICHTWEISEN ODER KONTINUIERLICHEN AUFBAUEN EINES WERKSTÜCKS**
CONSTRUCTION PLATFORM FOR LAYERED OR CONTINUOUS BUILDING OF A WORKPIECE
PLATEFORME DE CONSTRUCTION PERMETTANT LA CONSTRUCTION PAR COUCHES OU CONTINUE D'UNE PIÈCE

(30) Priorität: 22.04.2020 DE 102020002430
(43) Veröffentlichungstag der Anmeldung: 22.12.2021
(73) Patentinhaber: Ivoclar Vivadent AG, 9494 Schaan (LI)
(72) Erfinder: John, Hendrik, Buchs SG (CH)
(74) Vertreter: Baldus, Oliver

(56) Entgegenhaltungen:
- US-A1- 2010 283 188
- US-A1- 2012 248 657

## Beschreibung

Die vorliegende Erfindung betrifft eine Bauplattform zum schichtweisen oder kontinuierlichen Aufbauen eines Werkstücks in einem Stereolithographieverfahren, eine Stereolithographieeinrichtung mit einer Bauplattform und ein Verfahren zum schichtweisen oder kontinuierlichen Aufbauen eines Werkstücks durch eine Bauplattform.

Aufgrund des Absorptionsverhaltens von lichthärtenden Materialen, die für einen Stereolithographieprozess verwendet werden, reicht die Lichtleistung der Maskenprojektion teilweise nicht aus, um eine ausreichende Haftung des Werkstücks an der Bauplattform zu erzeugen, die die Trennkräfte am Wannenboden überwindet, sodass das Bauteil am Wannenboden beim Trennversuch haften bleibt. Dies kann durch eine aktive und temporäre Erhöhung der Haftung der Basisschichten an der Bauplattform mittels einer rückseitigen Belichtung an der Bauplattform-Oberfläche erreicht werden.

Die Druckschrift EP 2 337 667 B1 betrifft eine Vorrichtung zur Verarbeitung von lichtpolymerisierbarem Material. Eine in die Bauplattform integrierte rückseitige Belichtungseinrichtung wird an die Steuerung des Druckers angeschlossen und für die ersten Schichten im Bauprozess durch die Drucker-Steuerung angesteuert.

Die Druckschrift US 2010/283188 A1 betrifft ein Verfahren zur generativen Herstellung eines Formkörpers, insbesondere eines Grünlings für eine Dentalrestauration, aus unter Einwirkung von elektromagnetischer Strahlung verfestigbarem Material mittels einer Mehrzahl von Belichtungsschritten.

Dir Druckschrift US 2012/248657 A1 betrifft ein Verfahren zum schichtweisen Aufbau eines Formkörpers aus hochviskosem photopolymerisierbarem Material, bei dem eine Bauplattform, an deren Unterseite die erste Schicht des aufzubauenden Formkörpers ausgehärtet wird.

Die technische Aufgabe der vorliegenden Erfindung ist, eine modular ersetzbare und autonome Bauplattform bereitzustellen, die unabhängig von der Druckersteuerung arbeitet und die auf einfache Weise ein ungewolltes Ablösen von der Bauplattform von aufgebauten Schichten verhindert.

Diese Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird diese technische Aufgabe durch eine Bauplattform zum schichtweisen oder kontinuierlichen Aufbauen eines Werkstücks in einem Stereolithographieverfahren gelöst, mit einer rückseitigen Belichtungseinrichtung zum Belichten einer Schicht von einer Rückseite; einem Photosensor zum Erfassen einer Lichtintensität eines Lichtes von einer vorderseitigen Belichtungseinrichtung durch die Schicht und/oder ein Material und/oder über einen Umlenkspiegel; und einer Steuerungseinrichtung, die unabhängig von einem Drucker ist, zum Aktivieren der rückseitigen Belichtungseinrichtung, wenn die erfasste Lichtintensität der vorderseitigen Belichtungseinrichtung über einem vorgegebenen Grenzwert liegt. Dadurch wird beispielsweise der technische Vorteil erreicht, dass die ersten aufgebauten Schichten von zwei gegenüberliegenden Seiten belichtet und ausgehärtet werden und sich die Haftung an der Bauplattform erhöht.

In einer technisch vorteilhaften Ausführungsform der Bauplattform ist die rückseitige Belichtungseinrichtung durch eine Leuchtdiodenmatrix gebildet. Dadurch wird beispielsweise der technische Vorteil erreicht, dass mit geringem Energieaufwand eine großflächige Belichtung und Aushärtung erreicht wird.

In einer weiteren technisch vorteilhaften Ausführungsform der Bauplattform ist die Lichtintensität oder Belichtungszeit der rückseitigen Belichtungseinrichtung mittels eines Potentiometers einstellbar oder durch eine interne Steuerung steuerbar. Dadurch wird beispielsweise der technische Vorteil erreicht, dass die Lichtintensität manuell oder automatisch steuerbar ist und an das verwendete Material angepasst werden kann.

In einer weiteren technisch vorteilhaften Ausführungsform der Bauplattform ist eine Anzahl der rückseitig belichteten Schichten mittels eines Zählers steuerbar. Dadurch wird beispielsweise der technische Vorteil erreicht, dass die rückseitigen Belichtungen nur bei der ersten Schicht getriggert werden müssen, sollten die weiteren Schichten zu viel Licht absorbieren und der Photosensor nicht mehr aktiviert werden. Auch bei zu wenig Licht können zusätzlich weitere rückseitige Belichtungen durchgeführt werden, bis eine vorgegebene Anzahl von Schichten durch den Zähler erreicht ist.

In einer weiteren technisch vorteilhaften Ausführungsform der Bauplattform umfasst die Bauplattform einen elektrischen Energiespeicher zum Speichern von Energie für die rückseitige Belichtungseinrichtung. Dadurch wird beispielsweise der technische Vorteil erreicht, dass die Bauplattform die erforderliche Energie autonom und ohne externes Verbindungskabel bereitstellen kann.

In einer weiteren technisch vorteilhaften Ausführungsform der Bauplattform ist der Energiespeicher ein wiederaufladbarer und/oder auswechselbarer Akkumulator. Dadurch wird beispielsweise der technische Vorteil erreicht, dass der Energiespeicher wiederverwendet werden kann.

In einer weiteren technisch vorteilhaften Ausführungsform der Bauplattform ist der Photosensor eine Photodiode, die auf den Wellenlängenbereich der vorderseitigen Belichtung abgestimmt ist. Die Photodiode ist beispielsweise eine Siliziumcarbid-Photodiode oder eine Silizium-Photodiode. Dadurch wird beispielsweise der technische Vorteil erreicht, dass die Lichtintensität mit hoher Genauigkeit bestimmt werden kann.

In einer weiteren technisch vorteilhaften Ausführungsform der Bauplattform ist die Photodiode in einem Wellenlängenbereich der vorderseitigen Belichtungseinrichtung im UVA-Bereich oder im blauen Lichtbereich sensitiv. Dadurch wird beispielsweise der technische Vorteil erreicht, dass geeignete Wellenlängen zum Aushärten des Materials erfasst werden können.

In einer weiteren technisch vorteilhaften Ausführungsform der Bauplattform ist der vorgegebene Grenzwert zum Aktivieren der rückseitigen Belichtung durch einen Benutzer einstellbar. Dadurch wird beispielsweise der technische Vorteil erreicht, dass der Grenzwert an das verwendete Material angepasst werden kann.

In einer weiteren technisch vorteilhaften Ausführungsform der Bauplattform ist die Bauplattform mit rückseitiger Belichtungseinrichtung modular in eine Stereolithographieeinrichtung einsetzbar. Dadurch wird beispielsweise der technische Vorteil erreicht, dass die Bauplattform ausgetauscht werden kann.

In einer weiteren technisch vorteilhaften Ausführungsform der Bauplattform ist die rückseitige Belichtungseinrichtung auf die Bauplattform modular aufsetzbar oder aufschiebbar. Dadurch wird beispielsweise der technische Vorteil erreicht, dass eine Belichtungseinrichtung wahlweise eingesetzt oder ersetzt werden kann oder eine für das Material besonders geeignete Belichtungseinrichtung verwendet werden kann.

In einer weiteren technisch vorteilhaften Ausführungsform der Bauplattform ist die Bauplattform kabellos betreibbar. Dadurch wird beispielsweise der technische Vorteil erreicht, dass sich der Aufbau und die Handhabung der Bauplattform vereinfacht.

Gemäß einem zweiten Aspekt wird diese technische Aufgabe durch eine Stereolithographieeinrichtung mit einer Bauplattform nach dem ersten Aspekt gelöst. Durch die Stereolithographieeinrichtung werden die gleichen technischen Vorteile wie durch die Bauplattform nach dem ersten Aspekt erreicht.

In einer technisch vorteilhaften Ausführungsform der Stereolithographieeinrichtung ist die Stereolithographieeinrichtung derart ausgebildet, dass ein Teil des Lichts der vorderseitigen Belichtungseinrichtung, der zur Belichtung der ersten Schicht genutzt wird, auf den Photosensor gelenkt und so die rückseitige Belichtungsvorrichtung aktiviert wird. Dadurch wird beispielsweise der technische Vorteil erreicht, dass die rückseitige Belichtung durch den Bauprozess/Belichtungsprozess selbst indirekt aktiviert wird und keine direkte Ansteuerung durch den Drucker erfordert.

Gemäß einem dritten Aspekt wird diese technische Aufgabe durch ein Stereolithographieverfahren zum schichtweisen oder kontinuierlichen Aufbauen eines Werkstücks durch einer Bauplattform gelöst, mit den Schritten eines Belichtens einer Schicht von einer Vorderseite durch eine vorderseitige Belichtungseinrichtung; eines Erfassens einer Lichtintensität eines Lichtes von der vorderseitigen Belichtungseinrichtung durch die Schicht und/oder ein Material und/oder über einen Umlenkspiegel durch einen Photosensor; und eines Aktivierens der rückseitigen Belichtungseinrichtung durch eine Steuerungseinrichtung, die unabhängig von einem Drucker ist, wenn die erfasste Lichtintensität der vorderseitigen Belichtungseinrichtung über einem vorgegebenen Grenzwert liegt. Durch das Verfahren werden die gleichen technischen Vorteile wie durch die Bauplattform nach dem ersten Aspekt erreicht.

In einer technisch vorteilhaften Ausführungsform des Verfahrens wird die Aktivierung der rückseitigen Belichtungseinrichtung für eine vorgegebene Anzahl von Schichten und/oder durch eine angepasste Belichtungsdauer pro Schicht durchgeführt. Dadurch wird beispielsweise der technische Vorteil erreicht, dass der Polymerisationsgrad des rückseitig ausgehärteten Materials mit hoher Genauigkeit gesteuert werden kann.

In einer weiteren technisch vorteilhaften Ausführungsform des Verfahrens wird eine Höhe der Bauplattform für den Bauprozess einberechnet, um die Startposition der Bauplattform zu bestimmen und eine vorgegebene Schichtstärke der Schicht einzustellen. Dadurch wird beispielsweise der technische Vorteil erreicht, dass auch bei einem Wechsel der Bauplattform eine Sollschichtstärke aufrechterhalten werden kann.

Ausführungsbeispiele der Erfindung sind in den Zeichnungen dargestellt und werden im Folgenden näher beschrieben.

Es zeigen:
- Fig. 1: einen schematischen Zustand einer Bauplattform in einem Stereolithographieverfahren;
- Fig. 2: einen weiteren schematischen Zustand der Bauplattform in einem Stereolithographieverfahren;
- Fig. 3: einen weiteren schematischen Zustand der Bauplattform in einem Stereolithographieverfahren; und
- Fig. 4: ein Blockdiagramm eines Verfahrens zum schichtweisen oder kontinuierlichen Aufbauen des Werkstücks.

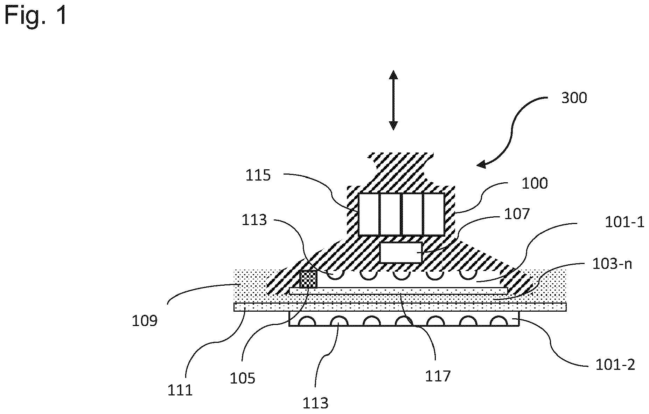

Fig. 1 zeigt einen schematischen Zustand einer Bauplattform 100 in einem Stereolithographieverfahren im Querschnitt. Die Bauplattform 100 dient zum schichtweisen oder kontinuierlichen Aufbauen eines Werkstücks 200 in einem Stereolithographieverfahren. Hierzu befindet sich die Unterseite der Bauplattform 100 in einem viskosen Material 109, das mittels Lichts ausgehärtet werden kann. Ist eine Schicht ausgehärtet, wird die Bauplattform von der Belichtungsebene wegbewegt und wieder auf die folgende Schichtdicke zugestellt, so dass erneut viskoses Material nachfließen kann, um anschließend ausgehärtet zu werden. Das Material 109 ist beispielsweise ein keramischer Schlicker, der zur Herstellung einer dentalen Restauration verwendet wird. Im Allgemeinen können jedoch auch andere Materialien verarbeitet werden.

Die Bauplattform 100 umfasst eine rückseitige Belichtungseinrichtung 101-1 zum Belichten einer Schicht 103-n des Materials 109 von einer Rückseite. Die Belichtungseinrichtung 101-1 umfasst mehrere Leuchtdioden 113, die hinter einer transparenten Fläche 117 angeordnet sind. Die Leuchtdioden 113 sind beispielsweise in der Lage, Licht mit einer Wellenlänge im Bereich von 220 bis 500 nm zu emittieren. Maxima im Spektrum können sich z.B. bei 365 nm, 385 nm, 405nm oder 460nm befinden. Im Allgemeinen können jedoch auch andere Wellenlängen verwendet werden.

Durch die rückseitige Belichtung härtet das Material 109 direkt an der transparenten Fläche 117 der Bauplattform 100 aus und bildet eine Schicht, die fest an der Bauplattform anhaftet (Burn-In-Schicht). Durch diese Maßnahme kann ein ungewolltes Ablösen des Werkstücks von der Bauplattform 100 verhindert werden. Die Lichtintensität und/oder die Belichtungszeit der rückseitigen Belichtungseinrichtung 101-1 kann pro Schicht mittels eines Potentiometers eingestellt, oder durch eine interne Steuerung pro Schicht automatisch angepasst werden.

Die Bauplattform 100 umfasst einen elektrischen Energiespeicher 115 zum Speichern von Energie für die rückseitige Belichtungseinrichtung 101-1. Durch diesen Energiespeicher 115 kann die rückseitige Belichtungseinrichtung 101-1 autonom mit elektrischer Energie versorgt werden, ohne dass hierzu ein Kabel in die Bauplattform 100 geführt werden muss. Bei dem elektrischen Energiespeicher 115 kann es sich beispielsweise um einen Batteriepack oder einen Akkumulatorpack handeln.

Auf der gegenüberliegenden Seite der Bauplattform 100 umfasst die Stereolithographieeinrichtung 300 eine vorderseitige Belichtungseinrichtung 101-2. Die vorderseitige Belichtungseinrichtung 101-2 umfasst eine digitale Projektionseinheit 113, die unter einem transparenten Boden 111 angeordnet ist. Die vorderseitige Belichtungseinrichtung 101-2 dient dazu, das Material schichtweise durch den transparenten Wannenboden hindurch von der gegenüberliegenden Seite der Bauplattform auszuhärten. Durch die Projektionseinheit 113 können beliebige Lichtmuster auf das Material projiziert werden. Die Projektionseinheit 113 kann zu diesem Zweck ein Digital Micromirror Device - DMD oder ein Liquid Crystal Display - LCD umfassen.

Die Bauplattform 100 umfasst einen Photosensor 105, der dazu geeignet ist, die Lichtintensität des Lichtes von der vorderseitigen Belichtungseinrichtung 101-2 durch das Material 109 hindurch zu erfassen. Der Photosensor 105 kann beispielsweise durch eine Photodiode gebildet sein. Je mehr Schichten das aufgebaute Werkstück aufweist, desto geringer ist die vom Photosensor 105 erfasste Lichtintensität. Der Photosensor 105 ist in einer Ecke des Baufeldes (=Belichtungsfeld) positioniert und kann auf die Belichtung der Schicht 103 reagieren.

Dieser Effekt kann genutzt werden, um die rückseitige Belichtungseinrichtung 101-1 lediglich für die ersten Schichten 103-n zu aktivieren, so dass zum einen eine unnötige Belichtung von bereits ausgehärten Schichten an der transparenten Fläche 117 verhindert und zum anderen nicht unnötig viele Schichten großflächig ausgehärtet werden und so unnötig Material verbraucht wird. Zudem wird elektrische Energie eingespart. Zu diesem Zweck umfasst die Bauplattform 100 eine elektronische Steuerungseinrichtung 107, die die rückseitige Belichtungseinrichtung 101-1 nur dann aktiviert, wenn die erfasste Lichtintensität der vorderseitigen Belichtungseinrichtung 101-2 über einem vorgegebenen Grenzwert liegt. Der Grenzwert kann auf einen beliebigen Wert eingestellt werden. Im Ergebnis kann der Energiespeicher 115 der Bauplattform 100 länger verwendet werden. Liegt die erfasste Lichtintensität unter dem vorgegebenen Grenzwert, d.h. ist bereits eine bestimmte Anzahl von Schichten vorhanden, wird die rückseitige Belichtungseinrichtung 101-1 nicht mehr aktiviert. Außerdem kann die Anzahl der rückseitig zu belichteten Schichten über einen einstellbaren Zähler gesteuert werden. Der Zähler zählt die Anzahl der aufgebauten Schichten von Beginn an. Bis zu einer vorgegebenen Anzahl der aufgebauten Schichten, wird jeweils die rückseitige Belichtungseinrichtung 101-1 aktiviert.

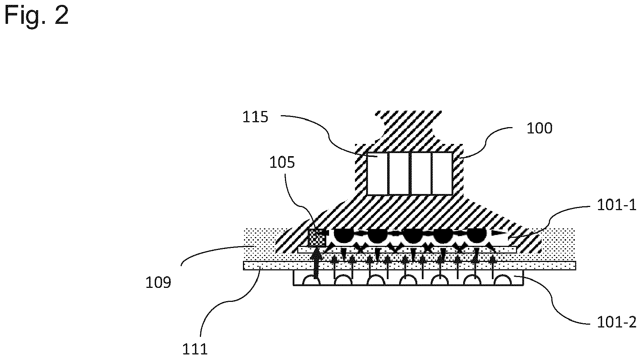

Fig. 2 zeigt einen weiteren schematischen Zustand der Bauplattform 100 in einem Stereolithographieverfahren. In diesem Fall wird die erste Schicht des Werkstücks aufgebaut. Ein Teil des Lichtes von der vorderseitigen Belichtungseinrichtung 101-2 trifft durch das Material hindurch auf den Photosensor 105.

Der Photosensor 105 erfasst eine hohe Lichtintensität der vorderseitigen Belichtungseinrichtung 101-2. Da lediglich eine einzelne Materialschicht vorhanden ist. Das Licht, das durch die Materialschicht dringt, wird von dieser nur zu einem geringen Teil absorbiert. Mit zunehmender Anzahl an Schichten nimmt die Lichtintensität entsprechend ab. Da diese Lichtintensität bei einer geringen Anzahl von Schichten über dem vorgegebenen Grenzwert liegt, wird in Reaktion die rückseitige Belichtungseinrichtung 101-1 aktiviert. Im Ergebnis wird die Schicht sowohl von der Vorderseite Bauteilabhängig als auch von der Rückseite ganzflächig belichtet. Dadurch entsteht eine Schicht (Burn-In-Schicht), die fest an der Bauplattform 100 anhaftet.

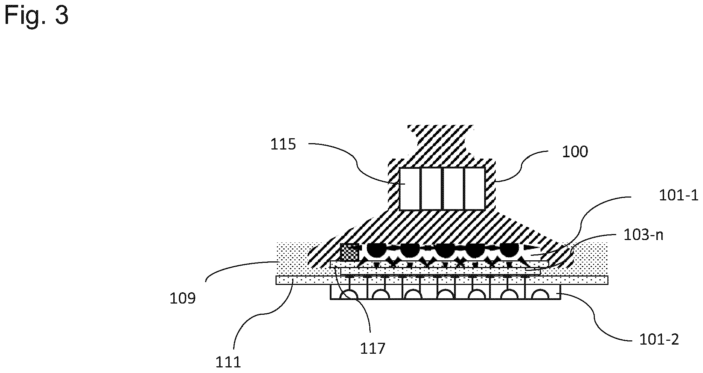

Fig. 3 zeigt einen weiteren schematischen Zustand der Bauplattform 100 in einem Stereolithographieverfahren. Die Schicht 103-n ist ausgehärtet und haftet an der transparenten Fläche 117 der Bauplattform 100 an. Anschließend wird die Bauplattform 100 angehoben und die weiteren Schichten 103-n aufgebaut. Mit zunehmender Anzahl von Schichten 103-n sinkt die erfasste Lichtintensität. Sobald diese unter den vorgegebenen Grenzwert sinkt oder der Zähler abgelaufen ist, wird die rückseitige Belichtungseinrichtung 1011 deaktiviert. Dadurch kann die Anzahl und der Polymerisationsgrad der benötigten Burn-In-Schichten exakt gesteuert und die Lebensdauer des Energiespeichers 115 nicht unnötig reduziert werden und auf eine Steuerung durch den Drucker verzichtet werden.

Die Bauplattform 100 kann einen Zähler umfassen, der bestimmt wie viele Schichten rückseitig belichtet werden sollen. Zusätzlich kann ein Umlenkspiegel vorgesehen sein, mit dem das Licht von der vorderseitigen Belichtungseinrichtung 101-2 direkt auf den Photosensor 105 gelenkt werden kann. Die Bauplattform 100 kann auch über einen digitalen Speicher umfassen, in dem deren Abmessungen, wie beispielsweise die Höhe, als digitaler Wert abgelegt sind. Dieser digitale Wert kann von der Stereolithographieeinrichtung 300 ausgelesen werden, so dass sich die Startposition (0-Position) der Bauplattform mit der Rückbelichtungseinheit gegenüber dem transparenten Boden 111 auf den gewünschten Z-Wert berechnen und einstellen lässt.

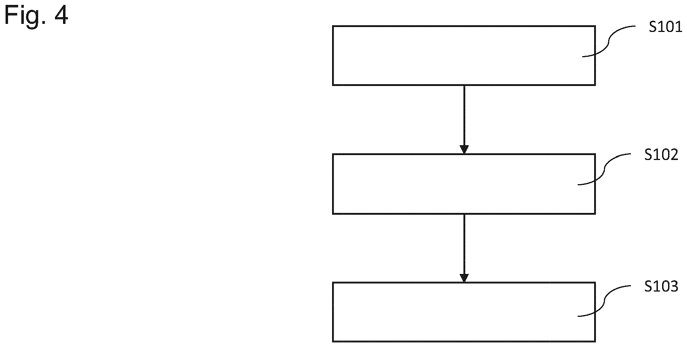

Fig. 4 zeigt ein Blockdiagramm eines Verfahrens zum schichtweisen Aufbauen des Werkstücks 200 durch eine Bauplattform 100. Im ersten Schritt S101 wird die Schicht 103-n von einer Vorderseite durch die vorderseitige Belichtungseinrichtung 101-2 belichtet. Im Schritt S102 wird anschließend die Lichtintensität des Lichtes von der vorderseitigen Belichtungseinrichtung 101-2 durch die Schicht 103-n und/oder das Material 109 und/oder über einen Umlenkspiegel durch einen Photosensor 105 erfasst. Im Schritt S103 wird die rückseitige Belichtungseinrichtung 101-1 durch die Steuerungseinrichtung 107 aktiviert, wenn die erfasste Lichtintensität der vorderseitigen Belichtungseinrichtung 101-2 über einem vorgegebenen Grenzwert liegt. Wenn diese unter dem vorgegebenen Grenzwert liegt wird die rückseitige Belichtungseinrichtung 101-1 deaktiviert.

Die Aktivierung der rückseitigen Belichtungseinrichtung 101-1 für eine vorgegebene Anzahl von Schichten 103-n durchgeführt werden. Zu diesem Zweck kann ein Zähler vorgesehen sein, der die Anzahl der aufgebauten Schichten zählt. Für den Bauprozess kann eine Höhe der Bauplattform 100 für den Bauprozess einberechnet werden, um die Startposition der Bauplattform 100 zu bestimmen und eine vorgegebene Schichtstärke der Schicht 103-n einzustellen.

Die Bauplattform 100 mit integrierter rückseitiger Belichtungseinrichtung 101-1 kann nachgerüstet und betrieben werden, ohne mit der Stereolithographieeinrichtung 300 elektronisch verbunden zu sein. Die rückseitige Belichtungseinrichtung 101-1 wird über den integrierten Photosensor durch eine standardmäßige Maskenbelichtung der Einbrennschichten angesteuert oder getriggert.

Die Ansteuerung der rückseitigen Belichtungseinrichtung 101-1 erfolgt somit über den Photosensor 105, der über die über die Belichtung durch die vorderseitige Belichtungseinrichtung 101-1 der Basisschichten getriggert wird. Die rückseitige Belichtungseinrichtung 101-1 kann so synchron zur Maskenprojektion angesteuert oder angeschaltet werden.

Die rückseitige Belichtung erfolgt temporär für die ersten ein bis fünf Schichten 103 synchron zur eigentlichen Belichtung der Einbrennschichten. Die Stromversorgung erfolgt unabhängig von der übrigen Stereolithographieeinrichtung 300 durch den Energiespeicher 117, der in die Bauplattform 100 integriert ist.

Durch die indirekte Ansteuerung über den Photosensor 105 kann die rückseitige Belichtungseinrichtung 101-1 ohne mechanischen Taster und ohne elektrische Verbindung zur übrigen Stereolithographieeinrichtung 300 aktiviert werden. Der Energiespeicher 115 erlaubt eine unabhängige Energieversorgung, für die kein externes Kabel benötigt wird.

Standardmäßig sind Stereolithographieeinrichtungen 300, wie beispielsweise Stereolithographiedrucker, oftmals nicht mit einer Bauplattform 100 mit rückseitiger Belichtungseinrichtung 101-1 ausgestattet, die mit einer Steuerung verbunden ist. Die autonome Bauplattform 100 ermöglicht ein Nachrüsten von Stereolithographieeinrichtungen 300, ohne diese hardware- und/oder softwaremäßig modifizieren zu müssen. Die nachgerüstete Bauplattform 100 arbeitet autark von der Druckersteuerung und wird lediglich über die Belichtung der vorderseitigen Belichtungseinrichtung 101-2 im Bauprozess gesteuert/getriggert.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Bauplattform
- 101: Belichtungseinrichtung
- 103: Schicht
- 105: Photosensor
- 107: Steuerungseinrichtung
- 109: Material
- 111: Boden
- 113: Leuchtdiode
- 115: Energiespeicher
- 117: Transparente Fläche

- 300: Stereolithographieeinrichtung

## Patentansprüche

1. Bauplattform (100) zum schichtweisen oder kontinuierlichen Aufbauen eines Werkstücks (200) in einem Stereolithographieverfahren, mit:
einer rückseitigen Belichtungseinrichtung (101-1) zum Belichten einer Schicht (103-n) von einer Rückseite;
einem Photosensor (105) zum Erfassen einer Lichtintensität eines Lichtes von einer vorderseitigen Belichtungseinrichtung (101-2) durch die Schicht (103-n) und/oder ein Material und/oder über einen Umlenkspiegel;
und mit einer Steuerungseinrichtung (107), die unabhängig von einem Drucker ist, zum Aktivieren der rückseitigen Belichtungseinrichtung (101-1), wenn die erfasste Lichtintensität der vorderseitigen Belichtungseinrichtung (101-2) über einem vorgegebenen Grenzwert liegt.

2. Bauplattform (100) nach Anspruch 1, wobei die rückseitige Belichtungseinrichtung (101-1) durch eine Leuchtdiodenmatrix gebildet ist.

3. Bauplattform (100) nach einem der vorangehenden Ansprüche, wobei die Lichtintensität oder Belichtungszeit der rückseitigen Belichtungseinrichtung (101-1) mittels eines Potentiometers einstellbar ist oder durch eine interne Steuerung steuerbar ist und/oder eine Anzahl der rückseitig belichteten Schichten (103-n) mittels eines Zählers steuerbar ist.

4. Bauplattform (100) nach einem der vorangehenden Ansprüche, wobei die Bauplattform (100) einen elektrischen Energiespeicher (115) zum Speichern von Energie für die rückseitige Belichtungseinrichtung (101-1) umfasst.

5. Bauplattform nach einem der vorangehenden Ansprüche, wobei der Photosensor (105) eine Photodiode ist, die auf den Wellenlängenbereich der vorderseitigen Belichtung abgestimmt ist.

6. Bauplattform (100) nach Anspruch 5, wobei die Photodiode in einem Wellenlängenbereich der vorderseitigen Belichtungseinrichtung im UVA-Bereich oder im blauen Lichtbereich sensitiv ist.

7. Bauplattform (100) nach einem der vorangehenden Ansprüche, wobei der vorgegebene Grenzwert zum Aktivieren der rückseitigen Belichtung durch einen Benutzer einstellbar ist.

8. Bauplattform (100) nach einem der vorangehenden Ansprüche, wobei die Bauplattform (100) mit rückseitiger Belichtungseinrichtung (101-1) modular in eine Stereolithographieeinrichtung (300) einsetzbar ist oder die rückseitige Belichtungseinrichtung (101-1) auf die Bauplattform (100) modular aufsetzbar oder aufschiebbar ist.

9. Stereolithographieeinrichtung (300) mit einer Bauplattform, nach einem der Ansprüche 1 bis 8.

10. Stereolithographieeinrichtung (300) nach Anspruch 9,
**dadurch gekennzeichnet, dass** die
Stereolithographieeinrichtung (300) derart ausgebildet ist, dass ein Teil des Lichts der vorderseitigen Belichtungseinrichtung, der zur Belichtung der ersten Schicht genutzt wird, auf den Photosensor gelenkt und so die rückseitige Belichtungsvorrichtung aktiviert wird.

11. Stereolithographieverfahren zum schichtweisen oder kontinuierlichen Aufbauen eines Werkstücks (200) in einem Stereolithographieverfahren durch eine Bauplattform (100), mit den Schritten:
Belichten (S101) einer Schicht (103-n) von einer Vorderseite durch eine vorderseitige Belichtungseinrichtung (101-1);
Erfassen (S102) einer Lichtintensität eines Lichtes von der vorderseitigen Belichtungseinrichtung (101-2) durch die Schicht (103-n) und/oder ein Material und/oder über einen Umlenkspiegel durch einen Photosensor (105);
Aktivieren (S103) einer rückseitigen Belichtungseinrichtung (101-1) der Bauplattform durch eine Steuerungseinrichtung (107), die unabhängig von einem Drucker ist, wenn die erfasste Lichtintensität der vorderseitigen Belichtungseinrichtung (101-2) über einem vorgegebenen Grenzwert liegt.

12. Verfahren nach Anspruch 11, wobei die Aktivierung der rückseitigen Belichtungseinrichtung (101-1) für eine vorgegebene Anzahl von Schichten und/oder durch eine angepasste Belichtungsdauer pro Schicht durchgeführt wird.

13. Verfahren nach einem der Ansprüche 11 oder 12, wobei eine Höhe der Bauplattform (100) für den Bauprozess einberechnet wird, um die Startposition der Bauplattform (100) zu bestimmen und eine vorgegebene Schichtstärke der Schicht (103-n) einzustellen.

## Claims

1. A construction platform (100) for constructing a workpiece (200) in layers or continuously in a stereolithography process, comprising:
a rear exposure device (101-1) for exposing a layer (103-n) from a rear side;
a photosensor (105) for detecting a light intensity of a light from a front exposure device (101-2) through the layer (103-n) and/or a material and/or via a deflection mirror; and comprising
a printer-independent control device (107) for activating the rear exposure device (101-1) when the detected light intensity of the front exposure device (101-2) is above a predetermined threshold.

2. The construction platform (100) according to claim 1, wherein the rear exposure device (101-1) is formed by a light-emitting diode matrix.

3. The construction platform (100) according to any of the preceding claims, wherein the light intensity or exposure time of the rear exposure device (101-1) can be set using a potentiometer or can be controlled by an internal control device, and/or a number of the layers (103-n) exposed from the rear can be controlled using a counter.

4. The construction platform (100) according to any of the preceding claims, wherein the construction platform (100) comprises an electrical energy storage (115) for storing energy for the rear exposure device (101-1).

5. The construction platform according to any of the preceding claims, wherein the photosensor (105) is a photodiode which is tuned to the wavelength range of the front exposure.

6. The construction platform (100) according to claim 5, wherein the photodiode is sensitive in a wavelength range of the front exposure device in the UVA range or in the blue light range.

7. The construction platform (100) according to any of the preceding claims, wherein the predetermined threshold for activating the rear exposure can be set by a user.

8. The construction platform (100) according to any of the preceding claims, wherein the construction platform (100) with rear exposure device (101-1) can be inserted modularly into a stereolithography device (300) or the rear exposure device (101-1) can be modularly placed on or slid onto the construction platform (100).

9. A stereolithography device (300) comprising a construction platform according to any of claims 1 to 8.

10. The stereolithography device (300) according to claim 9, **characterised in that** the stereolithography device (300) is formed so that part of the light of the front exposure device, which is used for exposing the first layer, is directed to the photosensor, and the rear exposure device is thus activated.

11. A stereolithography method for constructing a workpiece (200) in layers or continuously in a stereolithography process using a construction platform (100), comprising the steps of:
exposing (S101) a layer (103-n) from a front side using a front exposure device (101-1);
detecting (S102) a light intensity of light from the front exposure device (101-2) through the layer (103-n) and/or a material and/or via a deflection mirror using a photosensor (105);
activating (S103) a rear exposure device (101-1) of the construction platform using a printer-independent control device (107) if the detected light intensity of the front exposure device (101-2) is above a predetermined threshold.

12. The method according to claim 11, wherein the rear exposure device (101-1) is activated for a predetermined number of layers and/or using an adjusted exposure duration for each layer.

13. The method according to any of claims 11 or 12, wherein a height of the construction platform (100) is taken into account for the construction process to determine the start position of the construction platform (100) and to set a predetermined layer thickness of the layer (103-n).

## Revendications

1. Plate-forme de construction (100) pour la fabrication par couches ou en continu d'une pièce à usiner (200) dans un procédé de stéréolithographie, comprenant :
un dispositif d'exposition arrière (101-1) pour exposer une couche (103-n) depuis une face arrière ;
un photodétecteur (105) pour détecter une intensité lumineuse d'une lumière provenant d'un dispositif d'exposition avant (101-2) à travers la couche (103-n) et/ou un matériau et/ou par l'intermédiaire d'un miroir de déviation ;
et avec un dispositif de commande (107) indépendant d'une imprimante pour activer le dispositif d'exposition arrière (101-1) lorsque l'intensité lumineuse détectée du dispositif d'exposition avant (101-2) est supérieure à une valeur seuil prédéterminée.

2. Plate-forme de construction (100) selon la revendication 1, où le dispositif d'exposition arrière (101-1) est formé par une matrice de diodes électroluminescentes.

3. Plate-forme de construction (100) selon l'une des revendications précédentes, où l'intensité lumineuse ou le temps d'exposition du dispositif d'exposition arrière (101-1) est réglable au moyen d'un potentiomètre ou peut être commandé par une commande interne et/ou un nombre de couches (103-n) exposées par l'arrière peut être commandé au moyen d'un compteur.

4. Plateforme de construction (100) selon l'une des revendications précédentes, où la plateforme de construction (100) comprend un accumulateur d'énergie électrique (115) pour stocker de l'énergie pour le dispositif d'exposition par l'arrière (101¬1).

5. Plate-forme de construction selon l'une quelconque des revendications précédentes, où le photodétecteur (105) est une photodiode adaptée à la plage de longueurs d'onde de l'exposition avant.

6. Plateforme de construction (100) selon la revendication 5, où la photodiode est sensible à une gamme de longueurs d'onde du dispositif d'exposition frontale dans la gamme des UVA ou dans la gamme de la lumière bleue.

7. Plate-forme de construction (100) selon l'une des revendications précédentes, où la valeur limite prédéterminée pour l'activation de l'exposition arrière est réglable par un utilisateur.

8. Plate-forme de construction (100) selon l'une des revendications précédentes, où la plate-forme de construction (100) avec dispositif d'exposition arrière (101-1) peut être insérée de manière modulaire dans un dispositif de stéréolithographie (300) ou le dispositif d'exposition arrière (101-1) peut être posé ou glissé de manière modulaire sur la plate-forme de construction (100).

9. Dispositif de stéréolithographie (300) avec une plate-forme de construction, selon l'une des revendications 1 à 8.

10. Dispositif de stéréolithographie (300) selon la revendication 9, **caractérisé en ce que** le dispositif de stéréolithographie (300) est conçu de telle manière qu'une partie de la lumière du dispositif d'exposition avant, qui est utilisée pour l'exposition de la première couche, est dirigée sur le photodétecteur et que le dispositif d'exposition arrière est ainsi activé.

11. Procédé de stéréolithographie pour la construction par couches ou en continu d'une pièce à usiner (200) dans un procédé de stéréolithographie par une plate-forme de construction (100), comprenant les étapes suivantes :
exposition (S101) d'une couche (103-n) à partir d'une face avant par un dispositif d'exposition avant (101-1) ;
détection (S102) d'une intensité lumineuse d'une lumière provenant du moyen d'exposition avant (101-2) à travers la couche (103-n) et/ou un matériau et/ou via un miroir de déviation par un photodétecteur (105) ;
activation (S103) d'un dispositif d'exposition arrière (101-1) de la plate-forme de construction par un dispositif de commande (107) qui est indépendant d'une imprimante lorsque l'intensité lumineuse détectée du dispositif d'exposition avant (101-2) est supérieure à une valeur seuil prédéterminée.

12. Procédé selon la revendication 11, où l'activation du dispositif d'exposition arrière (101-1) est effectuée pour un nombre prédéterminé de couches et/ou par une durée d'exposition adaptée par couche.

13. Procédé selon l'une des revendications 11 ou 12, où une hauteur de la plate-forme de construction (100) est calculée pour le processus de construction afin de déterminer la position de départ de la plate-forme de construction (100) et d'ajuster une épaisseur de couche prédéterminée de la couche (103-n).
